# EUROPEAN PATENT APPLICATION

(11) **EP 4 672 394 A1**
(43) Date of publication of application: **31.12.2025**
(21) Application number: 24874990.5
(22) Date of filing: 04.10.2024
(51) Int. Cl.: H01M 10/04, H01M 50/609, H01M 50/618, H01M 10/058, H01M 10/42, H01M 50/70, H01M 50/60

(54) **SECONDARY BATTERY MANUFACTURING METHOD**

(30) Priority: 05.10.2023 KR 20230132667; 12.06.2024 KR 20240076271
(71) Applicant: LG ENERGY SOLUTION, LTD., Seoul 07335 (KR)
(72) Inventor: Kang, Gyung Soo, Daejeon 34122 (KR); Bae, Sang Woo, Daejeon 34122 (KR); Jeong, Yeon Beom, Daejeon 34122 (KR)
(74) Representative: Plasseraud IP
(86) International application number: PCT/KR2024/015098
(87) International publication number: WO 2025/075434

(57) **Abstract**

The present invention relates to a secondary battery manufacturing apparatus and manufacturing method, and, more particularly, to a secondary battery manufacturing apparatus and manufacturing method, which are capable of effectively performing degassing and enhancing impregnation for an electrolyte. According to one embodiment of the present invention, the secondary battery manufacturing method can be provided, the method comprising: a filling step of filling a battery case with an electrolyte; an insertion step of inserting an electrode assembly into the battery case; and a degassing step of connecting an adapter to the electrode assembly, transmitting excitation of the adapter to the electrode assembly, and exciting the electrolyte through the electrode assembly so as to degas same.

## Description

### Technical Field

The present invention relates to a secondary battery manufacturing device and a secondary battery manufacturing method, and more specifically, relates to a secondary battery manufacturing device and a secondary battery manufacturing method, capable of effectively performing impregnation property improvement for an electrolyte, and degassing.

### Background Art

Generally, as the supply of portable small electrical and electronic devices is spread, development of new type secondary batteries such as nickel-metal hydride batteries or lithium secondary batteries is actively underway. Recently, lithium secondary batteries have been widely used for automobiles as well as power tools.

The lithium secondary battery means a battery using carbon such as graphite as a negative electrode active material, a lithium containing oxide as a positive electrode material, and a non-aqueous solvent as an electrolyte.

Such a secondary battery is manufactured in the form of a battery assembly by accommodating an electrode assembly, in which a positive electrode, a separator, and a negative electrode are sequentially measured, in an exterior material, that is, a battery case, such as a pouch or a cylindrical can. Thereafter, a process of injecting the electrolyte into the battery assembly using an electrolyte injection device is performed. This is generally called a packaging process.

During the packaging process, the separator must be sufficiently impregnated after the electrolyte injection so that the electrolyte can be sufficiently filled between the electrodes. However, electrolyte bubbles may be generated and remain during the electrolyte injection process, and these residual bubbles also cause lowered impregnation properties.

In some cases, vacuum or pressurization is used to remove these residual bubbles during the packaging process, but, none the less, bubbles may remain.

The residual bubbles may cause battery performance degradation, and increase a gas generation amount inside the battery case.

Therefore, conventionally, an excessively long process time was required to remove bubbles in the electrolyte, and this inevitably increased the manufacturing cost.

### Disclosure

### Technical Problem

The present invention is intended to solve the problems of the conventional secondary battery manufacturing method.

Through one example of the present invention, it is intended to provide a device and a method capable of effectively increasing a rate and a degree of impregnation.

Through one example of the present invention, it is intended to provide a device and a method capable of effectively increasing a rate and a degree of degassing.

Through one example of the present invention, it is intended to provide a device and a method capable of more effectively removing residual bubbles and gases while preventing damage to an electrode assembly using a mesh filter.

Through one example of the present invention, it is intended to provide a device and a method capable of effectively reducing gas generation possibility inside a battery later, and significantly increasing its lifespan and stability, by significantly reducing residual gases while reducing a time required for a packaging process.

### Technical Solution

In order to achieve the above-described objects, according to one example of the present invention, it is possible to provide a secondary battery manufacturing method comprising: a filling process of filling an electrolyte into a battery case; an insertion process of inserting an electrode assembly into the inside of the battery case; and a degassing process of connecting an adapter to the electrode assembly, transmitting excitation of the adapter to the electrode assembly, and exciting the electrolyte through the electrode assembly to remove gases.

In the degassing process, the excitation is applied to the electrode assembly. Therefore, the excitation of the electrode assembly is transmitted to the surrounding electrolyte, whereby the electrolyte is also excited. Through this, the contact area between the electrolyte and the electrode assembly may increase, and thus, further smooth, and effective degassing may be performed.

It is preferable that after the degassing process, a vacuum process of providing the battery case and the electrode assembly with a vacuum environment to remove residual gases is performed.

The excitation applied to the adapter may be excited at an ultrasonic or megasonic excitation frequency.

It is preferable that the battery case is positioned so that an opening of the battery case faces upward, and then the filling process and the degassing process are performed. Through this, the electrolyte may be easily injected into the inside of the case, and the degassing may be performed more effectively.

The electrode assembly may be inserted and positioned in the battery case in a state where a shared jig is mounted thereon.

The shared jig may be positioned at the bottom of the opening, or may be positioned by protruding to the top of the opening. In addition, it is preferable that the electrode assembly and the adapter are coupled via the shared jig.

The shared jig may be called a gripper holding a part of the electrode assembly, which may be formed of a soft material to prevent damage to the electrode assembly.

The adapter is a constitution which is coupled with the shared jig to indirectly hold the electrode assembly, which may be a constitution subjected to direct excitation. Therefore, it is possible to prevent the electrode assembly from being damaged by the excitation of the adapter.

It is preferable that the degassing process is performed in a state where a mesh filter wraps the electrode assembly inside the battery case. The mesh filter may perform a function of capturing bubbles inside the electrolyte.

After the degassing process, the mesh filter is removed from the battery case, through which the captured bubbles may be smoothly discharged to the outside. Therefore, more effective degassing may be performed through the mesh filter.

The mesh filter may be inserted into the inside of the case together with the electrode assembly, or the mesh filter may be inserted into the inside of the case, and then the electrode assembly may be inserted into the inside of the case.

The insertion process may be performed after the filling process, or the filling process may be performed after the insertion process.

It may further comprise an impregnation process of connecting an adapter to the electrode assembly, transmitting a motion of the adapter to the electrode assembly, and stirring the electrolyte through the electrode assembly to improve impregnation properties of the electrolyte for the electrode assembly.

It is preferable that the degassing process is performed after the impregnation process is performed.

The motion of the adapter may comprise a translational motion and a rotational motion.

The adapter may comprise a stirring adapter for stirring the electrode assembly; and an excitation adapter, which is provided separately from the stirring adapter, for excitation of the electrode assembly.

The stirring adapter is directly coupled with the electrode assembly or is coupled with the electrode assembly through the shared jig, so that the electrode assembly may stir the electrolyte through stirring of the adapter.

The excitation adapter is directly coupled with the electrode assembly or is coupled with the electrode assembly through the shared jig, so that the electrode assembly and the electrolyte may be excited through excitation of the adapter.

In order to achieve the above-described objects, according to one example of the present invention, it is possible to provide comprising: a filling process of filling an electrolyte into a battery case; an insertion process of inserting an electrode assembly into the inside of the battery case; and a filling process for filling an electrolyte into a battery case; an insertion process for inserting an electrode assembly into the inside of the battery case; and an impregnation process of connecting an adapter to the electrode assembly, transmitting a motion of the adapter to the electrode assembly, and stirring the electrolyte through the electrode assembly to improve impregnation properties of the electrolyte for the electrode assembly.

The insertion process may be performed after the filling process, or the filling process may be performed after the insertion process.

It may further comprise: a degassing process of connecting an adapter to the electrode assembly, transmitting excitation of the adapter to the electrode assembly, and exciting the electrolyte through the electrode assembly to remove gases; and a vacuum process of providing a vacuum environment to the battery case and the electrode assembly to remove residual gas.

In order to achieve the above-described purpose, according to one example of the present invention, a filling process of filling an electrolyte into a battery case; an insertion process of inserting an electrode assembly into the battery case from the outside of the battery case; an impregnation process of connecting an adapter to the electrode assembly, transmitting a motion of the adapter to the electrode assembly, and stirring the electrolyte through the electrode assembly to improve impregnation properties of the electrolyte for the electrode assembly; and a degassing process of connecting an adapter to the electrode assembly, transmitting excitation of the adapter to the electrode assembly, and exciting the electrolyte through the electrode assembly to remove gases.

After the degassing process, a vacuum process of providing the battery case and the electrode assembly with a vacuum environment to remove residual gases may be performed.

The excitation applied to the adapter may be excited at an ultrasonic or megasonic frequency.

It is preferable that the motion of the adapter is a translational motion and a rotational motion. Through this, the electrolyte may be stirred while the electrode assembly performs the translational motion and the rotational motion inside the battery.

The adapter may comprise a stirring adapter for stirring the electrode assembly; and an excitation adapter, which is provided separately from the stirring adapter, for excitation of the electrode assembly.

The electrode assembly may be inserted into the battery case in a state where a shared jig is mounted on the top.

The electrode assembly and the adapter may be coupled via the shared jig.

In the filling process, the mesh filter may be introduced into the inside of the battery case so that in the insertion process, the mesh filter surrounds the introduced electrode assembly.

The mesh filter may be introduced before the filling of the electrolyte.

In the filling process, the electrolyte may be filled inside the battery case to which the mesh filter is introduced so that in the insertion process, the mesh filter surrounds the introduced electrode assembly.

It is preferable that the mesh filter is removed from the battery case after the degassing process. The removal of the mesh filter may be easily performed by pulling one end of the mesh filter near the upper opening of the battery case.

### Advantageous Effects

Through one example of the present invention, it is possible to provide a device and a method capable of effectively increasing a rate and a degree of impregnation.

Through one example of the present invention, it is possible to provide a device and a method capable of effectively increasing a rate and a degree of degassing.

Through one example of the present invention, it is possible to provide a device and a method capable of more effectively removing residual bubbles and gases while preventing damage to an electrode assembly using a mesh filter.

Through one example of the present invention, it is possible to provide a device and a method capable of effectively reducing gas generation possibility inside a battery later, and significantly increasing its lifespan and stability, by significantly reducing residual gases while reducing a time required for a packaging process.

### Description of Drawings

Figure 1 illustrates an appearance where an electrolyte is filled in a battery case.
Figure 2 illustrates an appearance where an electrode assembly is inserted into a battery case.
Figure 3 illustrates an appearance where an electrode assembly stirs an electrolyte.
Figure 4 illustrates an appearance where an electrode assembly vibrates.
Figure 5 illustrates an appearance where degassing is completed.
Figure 6 illustrates a flow of a manufacturing method according to one example of the present invention.

### Best Mode

Hereinafter, a manufacturing device and a manufacturing method according to one example of the present invention will be described in detail with reference to the attached drawings.

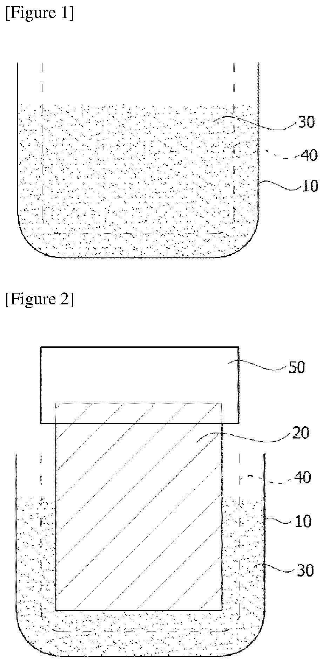

Figure 1 illustrates an appearance where an electrolyte is filled in a battery case, and Figure 2 illustrates an appearance where an electrode assembly is inserted into a battery case.

In a packaging process of a secondary battery, it is common that a manufactured electrode assembly is introduced into a battery case, and then an electrolyte is injected.

In the present example, the electrolyte may be injected into the battery case (10) first, and then the electrode assembly (20) may be introduced into the battery case (10), and conversely, the electrolyte may also be injected after the electrode assembly is introduced into the battery case (10).

The introduction of the electrolyte and the electrode assembly may be performed through an opening provided at the top of the battery case (10).

Depending on the shape of the battery case (10), the process of introducing the electrode assembly into the battery case (10) may vary.

As one example, in the case of a rectangular or cylindrical case, an opening may be formed in the case and an electrode assembly may be introduced through the opening. In this case, the electrolyte may be injected through the opening before or after introducing the electrode assembly.

As one example, in the case of a pouch-type case, an opening may be formed through coupling of the pouch case and the electrode assembly. In this case, the introduction of the electrode assembly into the case means that an assembly process of the electrode assembly and the case and an opening formation process of the case are performed together. Therefore, the electrolyte may be injected through the opening after the introduction of the electrode assembly.

In the secondary battery, an amount of the electrolyte to be filled in the battery case may be preset through design and verification processes. The amount of the electrolyte may be 5 to 90% of the height of the electrode assembly (20), and it may be preferably 20 to 80%.

Since the electrode assembly (20) itself has a volume filling a large portion of the inside of the battery case (10), the filling rate is inevitably slow when the electrolyte is filled after introduction of the electrode assembly (20). On the other hand, when the electrolyte is filled before introduction of the electrode assembly (20), a certain amount of electrolyte may be filled relatively quickly.

The electrodes and separators of the electrode assembly (20) must be sufficiently soaked in the electrolyte, and in particular, the degree of impregnation of the separator is very important. That is, it is preferable that the entire separator is sufficiently impregnated in the electrolyte.

When the electrolyte is introduced after introduction of the electrode assembly (20), the degree of impregnation may increase over time, but sufficient impregnation may not be performed in some parts of the separator. In addition, when the electrolyte is introduced after introduction of the electrode assembly (20), a bubble generation amount may be relatively larger. The reason is because an area where the electrolyte touches the inner surface of the battery case is narrow, as the electrolyte is introduced, whereby more energy is generated due to collisions, and accordingly, a gas emission amount increases, whereby more bubbles are generated. Therefore, in the present example, it is preferable that the electrolyte (30) is first introduced into the battery case (10), and then the electrode assembly (20) is introduced into the battery case (10). However, depending on the overall process efficiency, especially the shape of the case, the electrolyte injection may also be performed after introduction of the electrode assembly.

According to the present example, it is preferable that kinetic energy is actively applied to the electrode assembly (20) to increase the rate and degree of impregnation.

Figure 2 illustrates one example in which an electrode assembly (20) is introduced into a battery case (10) in a state where it is coupled with a shared jig (50).

The shared jig (50) may be coupled with the upper portion of the electrode assembly (20) and provided. The shared jig (50) may be provided in the form of tongs. The shared jig (50) may be coupled to the electrode assembly (20) after the manufacturing of the electrode assembly (20) is completed, and then the electrode assembly (20) with the shared jig (50) coupled may be introduced into the battery case (10). Of course, the shared jig (50) may be coupled to the upper portion of the electrode assembly (20) after the electrode assembly (20) is introduced into the battery case (10).

The shared jig (50) may be referred to as a jig holding the electrode assembly (20) by simultaneously pressurizing one side and the opposite side of the electrode assembly (20). Therefore, it is preferable that to prevent damage to the surface of the electrode assembly (20), the shared jig (50) is formed of a soft material or a plastic material. Particularly, it is preferable that the part in contact with the surface of the electrode assembly (20) is formed of a plastic material.

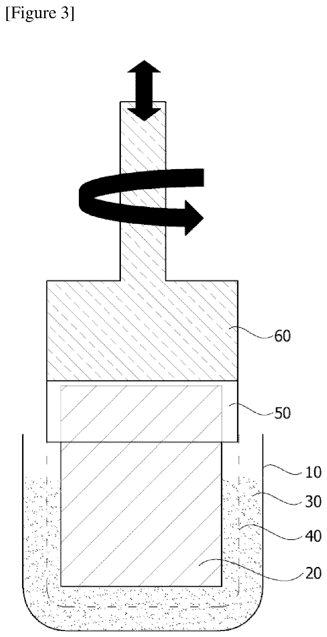

As shown in Figure 3, it is preferable that the electrode assembly (20) is provided to actively move inside the battery case (10). Specifically, the electrode assembly (20) may perform a rotational motion inside the battery case (10) to stir the electrolyte (30). That is, the electrode assembly (20) itself may perform a rotating blade function. In the stirring process, the area and time of the contact between the electrolyte and the electrode assembly are significantly increased, so that the rate and degree of impregnation may be significantly increased. In addition, to increase the rate and degree of impregnation for the entire height of the electrode assembly (20), it is preferable that the electrode assembly (20) performs a translational motion. That is, it is preferable that the electrode assembly (20) moves up and down.

The stirring motion and the translational motion may be performed alternately, and may also be performed simultaneously. During this process, gases in the electrolyte may be discharged in the form of bubbles due to the physical impact applied to the electrolyte and the electrode assembly (20). That is, the gas discharge in the electrolyte may be promoted.

It is preferable that such active motions of the electrode assembly are performed as an external force is transmitted to the electrode assembly (20) through an adapter (60). Specifically, an external drive part generating rotational and translational transfers is connected to the adapter (60), and the rotational and translational transfers of the adapter (60) may be transmitted to the electrode assembly (20). Here, it is preferable that the shared jig (50) performs a function of mediating the adapter (60) and the electrode assembly (20). That is, it is preferable that the shared jig is provided between both parts to alleviate the impact directly applied to the electrode assembly (20), thereby protecting the electrode assembly (20).

Meanwhile, when the battery case is in a cylindrical or rectangular type, the electrolyte stirring through the electrode assembly may be performed in a state where the battery case is fixed. In a state where the electrode assembly inside the battery case is not physically coupled with the battery case, the stirring may be performed. The impregnation process may be smoothly performed by the stirring of the electrolyte through the electrode assembly.

Meanwhile, when the battery case is in a pouch type, the electrolyte stirring through the electrode assembly may be performed in a state where the battery case is not fixed. In a state where the electrode assembly inside the battery case is physically coupled with the battery case, the motion of the electrode assembly may be transmitted to the electrolyte and the battery case. As a result, the electrode assembly, the electrolyte, and the entire case may be shaken up and down and rotated. At this time, the electrolyte stirring may be performed more smoothly by repeating forward and reverse rotation as the rotation.

The stirring motion and the translational motion cause a large momentum or displacement of the electrode assembly (20) and the electrolyte (30). Therefore, in this process, the impregnation may be performed quickly, and the gases may be discharged. However, bubbles on the surface of the electrode assembly (20), especially the surface of the separator, or fine bubbles in the electrolyte may still not be discharged.

Therefore, in the present example, it is preferable that the excitation causing a relatively small displacement is performed. This excitation may be performed after the stirring, and may also be performed separately or alone, independently of the stirring.

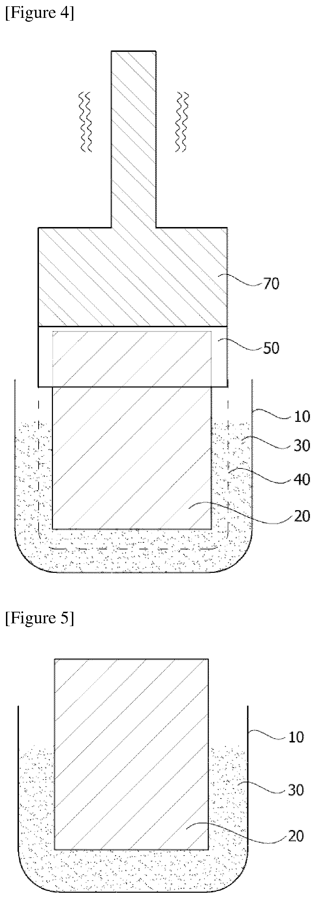

As shown in Figure 4, it is preferable that the electrode assembly (20) is actively excited inside the battery case (10). Specifically, the electrode assembly (20) may be provided to be excited at an excitation frequency inside the battery case (10). That is, the electrode assembly (20) itself may perform a vibrator function. During the vibration process, the bubble discharge may be promoted due to high-frequency vibration of the electrolyte and the electrode assembly. Of course, the degree of impregnation may also further increase during the vibration process.

The excitation frequency may be an ultrasonic frequency or a megasonic frequency. Specifically, the excitation frequency may be 20 to 3000 kHz. The higher the frequency, the smaller the amplitude, whereby damage to the electrode assembly may be reduced. More specifically, the excitation frequency for megasonic vibration may be 500 to 3000 kHz, and the excitation frequency for ultrasonic vibration may be 20 to 100 kHz.

It is preferable that such an active vibration of the electrode assembly is performed as an external vibration is transmitted to the electrode assembly (20) through the adapter (70). Specifically, an external excitor generating vibrations is connected to the adapter (70), and the vibration of the adapter (70) is transmitted to the electrode assembly (20), whereby the electrode assembly (20) may vibrate. Here, it is preferable that the shared jig (50) performs a function of mediating the adapter (70) and the electrode assembly (20). That is, it is preferable that the shared jig is provided between both parts to alleviate the impact directly applied to the electrode assembly (20), thereby protecting the electrode assembly (20).

As described above, in the case of a cylindrical or square case, the excitation may be performed in a state where the case is fixed, and in the case of a pouch-type case, the excitation may be performed in a state where the case is not fixed. In either case, smooth degassing may be performed by directly exciting the electrode assembly.

Meanwhile, the adapter (60) illustrated in Figure 3 and the adapter (70) illustrated in Figure 4 may be the same adapter, but both adapters may be distinguished because the form or degree of the motion or displacement to be transmitted is different. That is, it is preferable that the stirring adapter (60) and the excitation adapter (70) are distinguished from each other. The stirring adapter (60) may be connected to an external drive part or a stirring device to be attached to or detached from the shared jig (50), and the excitation adapter (70) may be connected to an external exciter or an exciting device to be attached to or detached from the shared jig (50).

When the electrolyte injection, electrode assembly introduction, stirring, and excitation are completed, the shared jig (50) may be removed from the electrode assembly (20), as illustrated in Figure 5. Thereafter, the overall packaging process may be completed by sealing the opening of the battery case.

The sealing of the opening may be performed in a vacuum environment, and the remaining gases may be additionally discharged during this process.

Through the above-described examples, the rate and degree of impregnation can be significantly increased, and the bubbles may be willingly and actively discharged in the packaging process. It can be known therefrom that the battery performance can be improved, and the lifespan can be improved, by minimizing the bubble generation or the gas generation amount in the completed battery later. In addition, it can be known that stability can be significantly increased by minimizing the gas generation amount.

Of course, through active stirring and vibration using the electrode assembly (20), the effects of the impregnation rate increase, the impregnation degree increase, and the gas discharge promotion and enhancement can be expected, and the effect capable of significantly reducing the manufacturing time can also be expected compared to the conventional packaging.

Meanwhile, in the present example, the removal of foams or bubbles can be further promoted through the mesh filter (40).

As shown in Figures 1 and 2, the electrolyte (30) and the mesh filter (40) may be introduced into the inside of the battery case (10). The mesh filter (40) may be introduced first, and then the electrolyte (30) may be introduced. Of course, the mesh filter (40) may be introduced into the inside of the battery case (10) in advance upon manufacturing the battery case (10), and then only the electrolyte may be introduced into the inside of the battery case (10) during the electrolyte injection process.

In the process of injecting the electrolyte (30), the mesh filter (40) may be impregnated into the electrolyte very quickly, as it has a mesh structure. In addition, the mesh filter (40) may closely adhere to the inner surface of the battery case (10) during this process.

It is preferable that the mesh filter (40) may be formed of a fiber material, and its shape may be freely deformed. That is, it is preferable that the mesh filter (40) is provided to wrap the electrode assembly (20) to be introduced later. The mesh filter (40) may be formed in a band shape having a certain width. Therefore, the mesh filter (40) may be easily removed from the battery case (10) by pulling one end of the mesh filter (40) later. That is, the mesh filter (40) may be very facilitated even in a state where the electrode assembly (20) is positioned in the battery case (10). This is possible through the material and shape of the mesh filter (40).

As shown in Figures 3 and 4, it is preferable that the stirring and vibration of the electrode assembly (20) are performed in a state where the mesh filter (40) is introduced. Here, since the mesh filter (40) is preferably formed of a very soft material, it may perform a function of protecting the outer shell of the electrode assembly (20). That is, the outer shell of the electrode assembly (20), especially the outer shell of the separator, can pass through the mesh filter (40) without flapping, thereby preventing damage to the separator.

Meanwhile, because of the characteristics of the mesh structure, bubble collection through the mesh filter (40) may be performed smoothly. Therefore, the bubbles or foams still existing inside the electrolyte through the stirring and vibration may be removed together with the mesh filter during the removal process of the mesh filter.

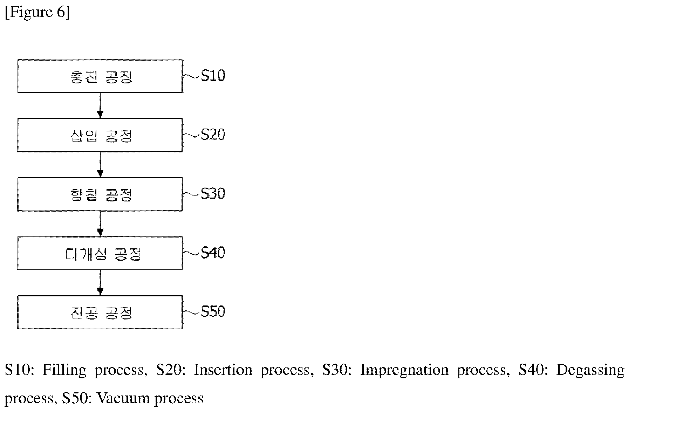

Hereinafter, a manufacturing method according to one example of the present invention will be described in more detail with reference to Figure 6. The described manufacturing method may be a packaging process or a part of a packaging process among general secondary battery manufacturing processes.

After the electrode assembly (20) and the battery case (10) are manufactured through separate processes, respectively, a process of assembling both parts may be performed. At this time, the battery case is filled with not only the electrode assembly but also the electrolyte (30).

In the present example, first, a filling process (S10) of filling an electrolyte into a battery case may be performed. Then, an insertion process (S20) of inserting an electrode assembly from the outside of the battery case to the inside of the battery case may be performed. Of course, the insertion process may be performed first, and then the filling process may also be performed.

After the insertion process (S20) is performed, an impregnation process (S30) of impregnating the electrode assembly with the electrolyte may be performed. The impregnation process (S30) may be performed by allowing the electrode assembly to move directly.

Specifically, the impregnation process (S30) may be performed while connecting an adapter (60) to the electrode assembly (20) and transmitting the motion of the adapter to the electrode assembly, thereby stirring the electrolyte through the electrode assembly. Through such stirring, the impregnation properties of the electrolyte for the electrode assembly may be improved.

Here, it is preferable that the motion of the adapter comprises a translational motion and a rotational motion. Specifically, the translational motion may be a motion in which the electrode assembly moves up and down. Such a motion of the adapter is directly transmitted to the motion of the electrode assembly (20), so that the electrode assembly (20) performs a function of directly stirring the electrolyte. In this process, the impregnation may be performed very effectively and quickly.

The translational motion and rotational motion of the electrode assembly may be performed alternately, and the motions may also be performed simultaneously.

After the impregnation process (S30) is performed, a degassing process (S40) may be performed. In the degassing process (S40), the residual gases in the battery case may be actively discharged to the outside.

Specifically, the gases may be actively removed by exciting the electrolyte through the electrode assembly. At this time, the electrode assembly itself also vibrates. More specifically, the vibration may be transmitted to the electrode assembly by connecting the adapter to the electrode assembly and exciting the adapter.

Through the excitation of the electrode assembly and the electrolyte, the bubbles attached to the surface of the electrode assembly and the residual bubbles inside the electrolyte vibrate together to be detached and risen, whereby the discharge to the outside may be promoted. That is, the degassing, in which the residual gases are discharged quickly and effectively, may be performed.

Meanwhile, after the degassing process (S50) is completed, a process of sealing the battery case may be performed. At this time, a vacuum process may be performed. That is, a vacuum environment may be provided to the battery case and the electrode assembly. Of course, the electrolyte may also be exposed to the vacuum environment. In the vacuum environment, the residual gases inside the electrolyte may be separated and discharged from the electrolyte due to the pressure difference. Such a vacuum process may be referred to as a process for performing the sealing process itself in the vacuum environment rather than a process for separately discharging the residual gases.

Through the active electrode assembly and the electrolyte stirring in the impregnation process, it is possible to create an environment capable of significantly increasing the impregnation rate and degree, and simultaneously performing the gas discharge quickly. Afterwards, the gas removal may be performed very quickly and efficiently through the active electrode assembly and the electrolyte vibration in the degassing process.

Meanwhile, since the mesh filter is provided inside the battery case in the impregnation process and the degassing process, it can be more effective in protecting the electrode assembly, and removing the foams and gases.

In addition, by directly stirring and vibrating the electrolyte through the motion and excitation of the electrode assembly itself, rather than the battery case, in the impregnation process and the degassing process, it is possible to manufacture a device for motion and excitation more easily. Particularly, by attenuating the impact of external force applied to the electrode assembly using the shared jig, it is possible to prevent damage to the electrode assembly.

In the above-described examples, the excitation of the electrode assembly itself, rather than the case accommodating the electrode assembly, and the vibration of the electrode assembly itself can be performed sequentially, simultaneously, or repeatedly. Of course, only one of them can also be performed. Through this, it is possible to early secure the impregnation properties, it is possible to increase the efficiency of the subsequent charging/discharging process, aging process, and degassing process, and it is possible to significantly reduce a defect occurrence rate.

### Industrial Applicability

It is described in the Detailed Description of Invention.

## Claims

1. A secondary battery manufacturing method comprising:
a filling process of filling an electrolyte into a battery case;
an insertion process of inserting an electrode assembly into the inside of the battery case; and
a degassing process of connecting an adapter to the electrode assembly, transmitting excitation of the adapter to the electrode assembly, and exciting the electrolyte through the electrode assembly to remove gases.

2. The secondary battery manufacturing method according to claim 1, comprising:
a vacuum process of providing the battery case and the electrode assembly with a vacuum environment to remove residual gases after the degassing process.

3. The secondary battery manufacturing method according to claim 1, **characterized in that**:
the excitation applied to the adapter is excited at an ultrasonic or megasonic excitation frequency.

4. The secondary battery manufacturing method according to claim 1, **characterized in that**:
the battery case is positioned so that an opening of the battery case faces upward, and then the filling process and the degassing process are performed.

5. The secondary battery manufacturing method according to claim 4, **characterized in that**:
the electrode assembly is inserted and positioned in the battery case in a state where a shared jig is mounted thereon.

6. The secondary battery manufacturing method according to claim 5, **characterized in that**:
the shared jig is positioned at the bottom of the opening, or is positioned by protruding to the top of the opening.

7. The secondary battery manufacturing method according to claim 6, **characterized in that**:
the electrode assembly and the adapter are coupled via the shared jig.

8. The secondary battery manufacturing method according to claim 1, **characterized in that**
the degassing process is performed in a state where a mesh filter wraps the electrode assembly inside the battery case.

9. The secondary battery manufacturing method according to claim 8, **characterized in that**
the mesh filter is removed from the battery case after the degassing process.

10. The secondary battery manufacturing method according to claim 8, **characterized in that**
the mesh filter is inserted into the inside of the case together with the electrode assembly, or the mesh filter is inserted into the inside of the case, and then the electrode assembly is inserted into the inside of the case.

11. The secondary battery manufacturing method according to any one of claims 1 to 10, **characterized in that**
the insertion process is performed after the filling process, or the filling process is performed after the insertion process.

12. The secondary battery manufacturing method according to claim 11, **characterized by** further comprising
an impregnation process of connecting an adapter to the electrode assembly, transmitting a motion of the adapter to the electrode assembly, and stirring the electrolyte through the electrode assembly to improve impregnation properties of the electrolyte for the electrode assembly.

13. The secondary battery manufacturing method according to claim 12, **characterized in that**
the degassing process is performed after the impregnation process is performed.

14. The secondary battery manufacturing method according to claim 12, **characterized in that**
the motion of the adapter comprises a translational motion and a rotational motion.

15. The secondary battery manufacturing method according to claim 12, **characterized in that**
the adapter comprises:
a stirring adapter for stirring the electrode assembly; and
an excitation adapter, which is provided separately from the stirring adapter, for excitation of the electrode assembly.

16. A secondary battery manufacturing method **characterized by** comprising:
a filling process of filling an electrolyte into a battery case;
an insertion process of inserting an electrode assembly into the inside of the battery case; and
an impregnation process of connecting an adapter to the electrode assembly, transmitting a motion of the adapter to the electrode assembly, and stirring the electrolyte through the electrode assembly to improve impregnation properties of the electrolyte for the electrode assembly.

17. The secondary battery manufacturing method according to claim 16, **characterized in that**
the insertion process is performed after the filling process, or the filling process is performed after the insertion process.

18. The secondary battery manufacturing method according to claim 17, **characterized by** further comprising:
a degassing process of connecting an adapter to the electrode assembly, transmitting excitation of the adapter to the electrode assembly, and exciting the electrolyte through the electrode assembly to remove gases; and
a vacuum process of providing a vacuum environment to the battery case and the electrode assembly to remove residual gases.
